Europäisches Patentamt

(19) European Patent Office

Office européen des brevets

(11) Numéro de publication: **0 245 145**
**B1**

(12) **FASCICULE DE BREVET EUROPEEN**

(45) Date de publication du fascicule du brevet: **24.10.90**

(21) Numéro de dépôt: **87400907.9**

(22) Date de dépôt: **17.04.87**

(51) Int. Cl.⁵: **B 23 K 26/00**

(54) **Procédé de soudage au laser et installation mettant en oeuvre ce procédé.**

(30) Priorité: **21.04.86 FR 8605685**

(43) Date de publication de la demande:
**11.11.87 Bulletin 87/46**

(45) Mention de la délivrance du brevet:
**24.10.90 Bulletin 90/43**

(84) Etats contractants désignés:
**AT BE CH DE ES GB GR IT LI LU NL SE**

(56) Documents cités:
**DE-C- 846 838**
**FR-A-1 574 396**
**US-A-3 131 284**
**US-A-4 577 088**

(73) Titulaire: **CMB PACKAGING S.A.**
**65, avenue Edouard Vaillant**
**F-92100 Boulogne Billancourt (FR)**

(72) Inventeur: **Riviere, Maurice**
**14, Allée des Myosotis**
**F-78390 Bois d'Arcy (FR)**
Inventeur: **Dauteuil, Daniel**
**Bercenay-en-Othe**
**F-10190 Estissac (FR)**

(74) Mandataire: **CABINET BONNET-THIRION**
**95 Boulevard Beaumarchais**
**F-75003 Paris (FR)**

Courier Press, Leamington Spa, England.

## Description

L'invention concerne un procédé de soudage au laser de deux bords rectilignes de deux plaques ou, selon une application privilégiée, d'une même plaque mise en forme de façon que deux de ses bords se rejoignent, les deux bords étant en contact par leurs champs.

L'invention, qui concerne plus particulièrement le domaine de la confection des viroles métalliques entrant dans la constitution des boîtes de conserve ou emballages analogues, vise entre autres à améliorer la qualité et la fiabilité d'une telle soudure ainsi que le rendement propre de l'installation.

On sait souder bord à bord et en continu des tôles minces découpées en plaques et, notamment, mises en forme par roulage pour constituer des viroles, au moyen d'un faisceau laser dirigé vers la ligne de jonction desdits bors. Si ces derniers sont en recouvrement, le faisceau doit traverser une épaisseur relativement importante de métal, ce qui nécessite d'utiliser des générateurs de laser de très forte puissance, donc très coûteux. En revanche, la soudure des deux bords placés champ contre champ nécessite moins de puissance mais pose des problèmes mécaniques très difficiles à résoudre, notamment pour déplacer la pièce à souder en regard du faisceau laser, avec la précision requise.

Même dans cette configuration de soudage champ contre champ, la puissance du générateur de faisceau laser reste importante. Elle est déterminée par le fait que ledit faisceau doit fondre toute l'épaisseur de métal qu'il rencontre avant d'atteindre la face interne de la virole et aussi par le fait qu'une grande partie de l'énergie transportée par le faisceau laser est perdue par réflexion. Dans l'état actuel des choses, le rendement d'un faisceau laser n'est, pour toutes ces raisons, que de 20 à 30%. Ces réflexions peuvent être dangereuses pour les opérateurs.

Elles sont la cause d'élévations de température des pièces mécaniques environnant le poste de soudage, ce qui rend plus problématique encore les problèmes de guidage des viroles, en raison des dilatations de ces pièces et des pertes de réglage qu'elles provoquent. Les réflexions peuvent même entraîner la détérioration du système optique, notamment la lentille de focalisation. D'autres causes peuvent entraîner une perte d'efficacité supplémentaire et/ou une soudure de mauvaise qualité. Ainsi, un mauvais "accostage" des champs en contact (c'est-à-dire des différences de niveau entre les bords, provoquées notamment par la déformation de la tôle au cisaillage) peut être la cause d'une déviation partielle du faisceau et donc d'une perte supplémentaire d'efficacité. De même, d'éventuelles barbes de découpage peuvent être une cause de déviation partielle du faisceau. Il est aussi impératif que les deux bords à souder défilent parfaitement dans l'axe du faisceau. Tout décalage latéral par rapport au faisceau fait fondre plus de métal de l'un des bords et réalise ainsi, au mieux, une soudure dissymétrique, source d'amorce de rupture lors d'opérations ultérieures. Dès que le décalage devient trop important, le métal n'est fondu que d'un seul côté de la jonction et la soudure n'est donc pas réalisée. Le brevet US—A—4 577 088 propose un type de solution à au moins certains de ces problèmes, consistant principalement à incliner les bords à souder l'un par rapport à l'autre. L'invention propose une autre solution.

Dans cet esprit, l'invention concerne donc essentiellement un procédé de soudage au laser de deux bords rectilignes de deux plaques ou d'une même plaque mise en forme, les deux bords étant mis en contact par leurs champs, consistant à diriger un faisceau laser vers la ligne de contact desdits champs et à provoquer un mouvement relatif entre ledit faisceau et ladite ligne de contact de façon que le "point d'impact" dudit faisceau se déplace le long de ladite ligne de contact, tout en appliquant sur la ou les plaques des forces sollicitant les deux champs précités l'un vers l'autre, caractérisé en ce qu'il consiste à pratiquer des chanfreins le long desdits bords longitudinaux avant de les mettre en contact de façon à former un sillon à section sensiblement en forme de V lorsque les deux bords sont mis en contact par leurs champs, les chanfreins étant positionnés de telle sorte que ledit sillon soit ouvert dans la direction dudit faisceau laser.

Ainsi, pendant le soudage, le faisceau commence par fondre les parties proches des arêtes des chanfreins en contact, ce qui nécessite moins d'énergie et les bords se rapprochent au fur et à mesure de la fusion sous l'effet des forces sollicitant les champs l'un vers l'autre. La fusion de métal se propage donc progressivement sur toute l'épaisseur de la tôle, en faisant disparaître le sillon.

D'autre part, comme ledit sillon à section sensiblement en forme de V est ouvert dans la direction du faisceau laser, un défaut d'accostage ne peut nuire à la qualité de la soudure car le faisceau est "piégé" entre les parois du sillon formé par les deux bords et se réfléchit entre elles. De même, un léger décalage latéral est sans influence sur la soudure du fait que le faisceau est réfléchi entre les parois du sillon, avant la disparition de celui-ci. Il en résulte qu'une partie plus importante de l'énergie transportée par le faisceau est utilisée pour faire fondre le métal. Enfin, du fait du chanfreinage des bords, les barbes de cisaillage sont en grande partie supprimés ou en tous cas ne sont pas orientées vers le faisceau et ne risquent donc pas d'être la cause de déviations partielles de celui-ci.

L'invention concerne également une installation de fabrication d'une virole par soudage au laser de deux bords parallèles opposés d'une plaque de tôle mise en forme, du type comportant des moyens générateurs d'un faisceau laser, des moyens de transmission et de focalisation dudit faisceau vers un "point d'impact" de celui-ci situé le long de la ligne de contact desdits bords, des moyens pour provoquer un mouvement relatif dudit "point d'impact" le long de ladite ligne de contact et des moyens de sollicitation agencés pour enserrer ladite plaque de tôle mise en forme et solliciter les champs desdits bords l'un vers l'autre, caractérisée en ce qu'elle comprend, des moyens de chanfreinage desdits bords parallèles agencés de façon que ces bords définissent, une fois rejoints un sillon à section sensiblement en forme de V ouvert dans la direction dudit faisceau laser, lesdits moyens de chanfreinage étant combinés à des moyens de découpage desdites plaques comportant des molettes et enclumes situées deux à deux de part et d'autre d'un plan de circulation des plaques, lesdites molettes étant conformées pour imprimer, par refoulement, des rainures à section sensiblement en forme de V dans lesdites feuilles.

Cette installation pourra également avantageusement comporter un poste de débitage de feuilles de tôle dans lesquelles seront découpées les plaques rectangulaires. Un tel poste de débitage pourra alors comporter deux arbres parallèles rotatifs portant respectivement des jeux de molettes et enclumes situés deux à deux de part et d'autre d'un plan de circulation desdites feuilles. Les molettes seront conformées pour imprimer, par refoulement, les rainures précitées dans lesdites feuilles, la rupture ultérieure de ces rainures individualisant les chanfreins précités.

L'invention sera mieux comprise et d'autres avantages de celles-ci apparaîtront plus clairement à la lumière de la description qui va suivre illustrant le procédé de soudage conforme à l'invention et des parties de l'installation susceptibles de mettre ce procédé en oeuvre, donnée uniquement à titre d'exemple, et faite en référence aux dessins annexés dans lesquels:

— la figure 1 illustre schématiquement un poste de soudage d'une installation conforme à l'invention;

— la figure 2 illustre un poste de débitage de feuilles de tôle de cette installation; et

— la figure 3 est une vue de détail et à plus grande échelle illustrant la formation des chanfreins au poste de débitage de la figure 2.

En se reportant aux dessins, on a représenté plusieurs parties d'une installation de soudage au laser mettant en oeuvre le concept de l'invention. Les parties représentées sont celles qui ont plus particulièrement trait à l'invention; les autres concernent essentiellement des moyens de convoyage des plaques de tôle et des moyens de mise en forme de ces plaques, par roulage, permettant d'ébaucher des viroles prêtes à être définitivement formées par une soudure longitudinale des bords rejoints, champ contre champ, de chaque plaque. Tous ces moyens sont classiques et n'ont pas été représentés pour cette raison.

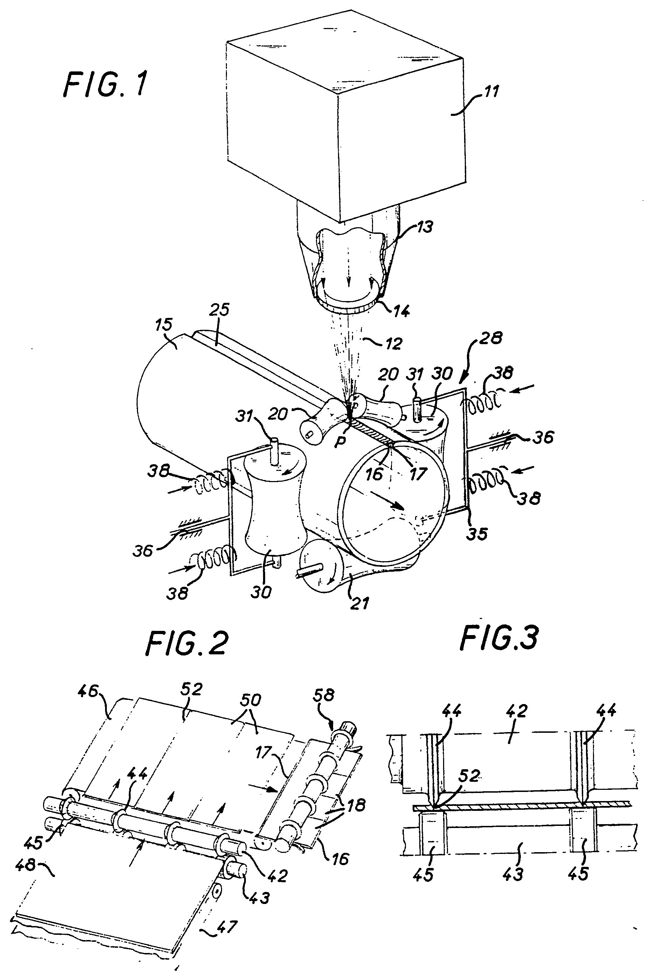

La figure 1 illustre plus particulièrement le poste de soudage avec, représenté schématiquement par un bloc fonctionnel, un générateur laser 11 émettant un faisceau laser 12, et des moyens de transmission et de focalisation 13 dudit faisceau, incluant notamment une lentille de focalisation 14. Le faisceau se focalise en un point P constituant son "point d'impact" avec une virole métallique 15. Ce "point d'impact" est situé le long de la ligne de contact des champs des deux bords rectilignes rejoints 16, 17 d'une plaque rectangulaire 18 (voir figure 2) roulée sur elle-même pour ébaucher la virole 15. Divers rouleaux de maintien 20 et d'entraînement 21, classiques en eux-mêmes, sont prévus au voisinage du faisceau laser pour imposer la forme de la virole en formation et la faire progresser le long de son propre axe longitudinal de façon que le "point d'impact" P du faisceau focalisé se déplace le long de la ligne de contact des champs des bords 16 et 17. Le faisceau est pointé vers la virole, sensiblement radialement. Selon une particularité importante de l'invention, les bords rectilignes 16, 17 comportent des chanfreins définissant un sillon 25 à section sensiblement en forme de V. De préférence, ce sillon s'ouvre dans la direction du faisceau laser 12 de sorte que ce dernier commence par fondre le métal situé au voisinage de la face interne de la virole. En outre, des moyens de sollicitation 28 sont agencés de part et d'autre du faisceau pour enserrer la virole 15 pendant son déplacement en regard du faisceau, de façon à solliciter l'un vers l'autre et champ contre champ, les bords 16 et 17 munis de chanfreins. Selon l'exemple schématiquement représenté, ces moyens de sollicitation comportent deux rouleaux 30 dont les axes 31, parallèles, sont portés par des supports 35 mobiles dans des moyens de guidage respectifs 36 définis dans un bâti fixe. Le déplacement des supports 35 se fait ici sensiblement le long d'une même direction perpendiculaire à la direction de déplacement de la virole 15. Selon l'exemple, l'agencement est tel que les rouleaux 30 enserrent la virole 15 sensiblement diamétralement et que leurs axes 31 soient sensiblement parallèles au faisceau laser 12 et situés de part et d'autre de la trajectoire de celui-ci. Des moyens élastiques 38, tels que des ressorts, sont couplés aux supports mobiles 35 pour solliciter les rouleaux l'un vers l'autre et enserrer ainsi la virole avec une certaine force pendant le soudage.

Ainsi, au fur et à mesure que la virole défile sous le faisceau laser, celui-ci commence par fondre les extrémités amincies des chanfreins, avec une relative facilité du fait de la faible quantité de métal concernée et, au fur et à mesure que le métal fond, les moyens de sollicitation 28 provoquent un resserrement de la virole entraînant la disparition progressive du sillon 25. La soudure s'effectue ainsi dans de meilleures conditions, plus rapidement et/ou avec moins d'énergie et aussi avec la certitude que la zone soudée s'étend bien en profondeur jusqu'à la face interne de la virole. En outre, comme mentionné précédemment, les pertes d'énergie par déviation partielle du faisceau sont évitées ou largement atténuées par le fait que le faisceau se trouve "piégé" dans le sillon 25, ce qui autorise aussi une plus grande tolérance dans l'alignement des bords à souder par rapport au faisceau.

Les figures 2 et 3 illustrent plus particulièrement un poste de débitage de tôles, placé en amont du poste de soudage de la figure 1 et sur lequel les plaques de tôle 18 rectangulaires, sont individualisées et préparées pour comporter des chanfreins sur deux de leurs côtés opposés.

Selon une autre particularité importante de l'invention, ce poste de débitage comporte deux arbres rotatifs parallèles 42, 43 portant respectivement des molettes 44 à profil périphérique en forme de V et des enclumes 35 à profil périphérique cylindrique. Les molettes et enclumes se correspondent deux à deux et sont situées, pour chaque paire, de part et d'autre d'un plan de circulation de feuilles de tôle 38, matérialisé, par exemple, par un convoyeur à bande 47. Les paires de molettes et enclumes sont espacées les unes des autres d'une même distance prédéterminée, suivant une direction parallèle aux arbres 42 et 43, de façon à pouvoir définir des bandes 50, identiques, dans chaque feuille 48. Chaque molette est écartée d'une très faible distance de l'enclume qui lui correspond (voir figure 3) de façon à imprimer par refoulement des rainures 52 à section sensiblement en forme de V dans lesdites feuilles 48. Ces dernières sont ensuite reprises par un convoyeur à bande 46 se déplaçant parallèlement aux arbres 42 et 43 et les bandes 50 sont découpées en un nombre prédéterminé de plaques 18, par de classiques moyens de cisaillage 58 à couteaux circulaires. L'écartement entre molette et enclume est tel que la profondeur de chaque rainure n'est que très légèrement inférieure à l'épaisseur de la tôle, ce qui permet de séparer facilement les bandes 50 les unes des autres, par tout moyen mécanique convenable, non représenté, éventuellement grâce au seul effort de traction exercé sur chaque bande 50 lorsqu'elle s'engage dans les moyens de cisaillage 58. Bien entendu, il va de soi que le découpage des bandes en plaques 18 peut être effectué avant ou après la séparation desdites bandes sans sortir du cadre de l'invention.

On voit donc que chaque ensemble molette-enclume donne naissance à une rainure 52 entre deux bandes 50 adjacentes et que la séparation de ces bandes donne lieu à la matérialisation des chanfreins précités. Ultérieurement, après le roulage de chaque plaque 18 en virole, les deux chanfreins de cette plaque donnent naissance en se rejoignant, au sillon 25 de la figure 1.

## Revendications

1. Procédé de soudage au laser de deux bords rectilignes de deux plaques ou d'une même plaque (18) mise en forme, les deux bords étant mis en contact par leurs champs, consistant à diriger un faisceau laser (12) vers la ligne de contact desdits champs et à provoquer un mouvement relatif entre ledit faisceau et ladite ligne de contact de façon que le "point d'impact" (P) dudit faisceau se déplace le long de ladite ligne de contact, tout en appliquant sur la ou les plaques des forces sollicitant les deux champs précités l'un vers l'autre, caractérisé en ce qu'il consiste à pratiquer des chanfreins le long desdits bords longitudinaux avant de les mettre en contact de façon à former un sillon (25) à section sensiblement en forme de V lorsque les deux bords sont mis en contact par leurs champs, les chanfreins étant positionnés de telle sorte que ledit sillon soit ouvert dans la direction dudit faisceau laser.

2. Procédé selon la revendication 1, pour la fabrication d'une virole tubulaire (15) à partir d'une plaque rectangulaire (18), consistant à conformer cette plaque pour lui donner la forme tubulaire voulue en joignant deux bords parallèles de ladite plaque champ contre champ, caractérisé en ce qu'il consiste à pratiquer lesdites chanfreins sur ces deux bords parallèles de ladite plaque, préalablement à sa conformation en virole et à déplacer ladite virole, pendant le soudage, entre des rouleaux (30) sollicités élastiquement l'un vers l'autre.

3. Procédé selon l'une des revendications précédentes, pour la fabrication de viroles métalliques à partir de plaques rectangulaires, caractérisé en ce qu'il consiste à pratiquer, par refoulement, des rainures (52) parallèles à section sensiblement en forme de V dans des feuilles de tôle suivant une direction prédéterminée et à découper les bandes (50) délimitées par lesdites rainures, perpendiculairement à celles-ci pour individualiser des plaques rectangulaires (18) précitées, un effort de rupture desdites rainures étant exercé avant ou après la phase de découpage, pour individualiser lesdits chanfreins.

4. Installation de fabrication d'une virole par soudage au laser de deux bords parallèles opposés d'une plaque de tôle mise en forme, du type comportant des moyens générateurs d'un faisceau laser, des moyens de transmission et de focalisation (13) dudit faisceau vers un "point d'impact" (P) de celui-ci situé le long de la ligne de contact desdits bords, des moyens pour provoquer un mouvement relatif dudit "point d'impact" le long de ladite ligne de contact et des moyens de sollicitation (28) agencés pour enserrer ladite plaque de tôle mise en forme et solliciter les champs desdits bords l'un vers l'autre, caractérisée en ce qu'elle comprend, des moyens de chanfreinage (44, 45) desdits bords parallèles agencés de façon que ces bords définissent, une fois rejoints un sillon (25) à section sensiblement en forme de V ouvert dans la direction dudit faisceau laser, lesdits moyens de chanfreinage étant combinés à des moyens de découpage desdites plaques comportant des molettes (44) et enclumes (45) situées deux à deux de part et d'autre d'un plan de circulation des plaques, lesdites molettes étant conformées pour imprimer, par refoulement, des rainures (52) à section sensiblement en forme de V dans lesdites feuilles.

5. Installation selon la revendication 4, caractérisée en ce que les moyens de sollicitation (28) précités comportent au moins deux rouleaux (30) dont les axes sont portés par des supports (35) mobiles dans des moyens de guidage (36) respectifs définis dans un bâti fixe, ces supports mobiles étant susceptibles de se déplacer perpendiculairement à une direction de déplacement de ladite virole, en ce que ces rouleaux sont situés de part et d'autre de la trajectoire dudit faisceau laser et en ce que des moyens élastiques (38) sont couplés auxdits supports mobiles, pour solliciter lesdits rouleaux l'un vers l'autre.

6. Installation selon la revendication 5, dans laquelle les moyens de découpage forment un poste de débitage de feuilles de tôle (48) dans lesquelles sont découpées lesdites plaques rectangulaires (18), caractérisée en ce que ce poste de débitage comporte deux arbres rotatifs parallèles (42, 43) portant respectivement des jeux de molettes (44) et enclumes (45) précitées situées deux à deux de part et d'autre d'un plan de circulation desdites feuilles, lesdits jeux étant espacés les uns des autres suivant une direction parallèle auxdits arbres.

## Patentansprüche

1. Verfahren zum Laserschweißen von zwei geradlinigen Kanten von zwei Tafeln oder von ein und derselben Tafel (18), welche in eine Form gebracht wurde, in der die beiden Schmalkanten in Kontakt gebracht werden, bei dem ein Laserstrahl (12) gegen die Kontaktlinie der freien Kanten gerichtet wird und eine Relativbewegung zwischen dem genannten Strahl und der Kontaktlinie in der Weise hervorgerufen wird, daß der "Auftreffpunkt" (P) des genannten Strahls sich entlang der Kontaktlinie verschiebt, wobei auf die Tafel oder Tafeln Kräfte zum Vorspannen der beiden freien Kanten gegeneinander aufgebracht werden, dadurch gekennzeichnet, daß es darin besteht, Abschrägungen entlang der genannten Längskanten herzustellen, bevor diese in Kontakt gebracht werden, und zwar so, daß sie eine Rinne (25) von im wesentlichen V-förmigem Querschnitt bilden, wenn die beiden Kanten über ihre schmalen Bereiche in Kontakt gebracht werden und wobei die Abschrägungen so angeordnet sind, daß die Rinne in Richtung des genannten Laserstrahls offen ist.

2. Verfahren nach Anspruch 1 zum Herstellen eines rohrförmigen Mantels (15) aus einer rechteckförmigen Tafel (18), welches darin besteht, diese Tafel in eine gewünschte Rohrform umzuformen, indem man zwei parallele Randbereiche der genannten Tafel Schmalkante gegen Schmalkante zusammenbringt, dadurch gekennzeichnet, daß es darin besteht, die genannten Abschrägungen auf den beiden parallelen Randbereichen der Tafel anzubringen, und zwar vor der Umformung in einen Mantel, und daß man der genannten Mantel während der Verschweißung zwischen Rollen (30) verschiebt, die elastisch gegeneinander vorgespannt sind.

3. Verfahren nach einem der voranstehenden Ansprüche zur Herstellung von metallischen Mänteln aus rechteckförmigen Tafeln, dadurch gekennzeichnet, daß es darin besteht, daß man durch Drücken parallele Rinnen (52) mit einem im wesentlichen V-förmigen Querschnitt in die Tafeln aus Blech in einer vorbestimmten Richtung einarbeitet und Bänder (50) abschneidet, die durch die genannten Rinnen begrenzt sind, und zwar senkrecht zu diesen, um die zuvor erwähnten rechteckförmigen Tafeln zu vereinzeln, wobei eine Kraft zum Durchbrechen der genannten Rinnen vor oder nach der Trennphase ausgeübt wird, um die genannten Abschrägungen zu individualisieren.

4. Anordnung zum Herstellen eines Mantels durch Laserschweißen von zwei parallelen, sich gegenüberliegenden Randbereichen einer in entsprechende Form gebrachten Blechtafel, und zwar des Typs, der Mittel zum Erzeugen eines Laserstrahls, Mittel zum Übertragen und Fokusieren (13) des Strahles auf einen "Auftreffpunkt" (P) des Strahles, welcher Punkt auf einer Kontaktlinie der Randbereiche liegt, Mittel zum Erzeugen einer Relativbewegung des genannten "Auftreffpunktes" entlang der genannten Kontaktlinie sowie Vorspannmittel (28) aufweist, die wirksam sind, um die genannte in Form gebrachte Blechtafel einzuspannen und die freien Kanten der Randbereiche gegeneinander vorzuspannen, dadurch gekennzeichnet, daß sie aufweist, Mittel (44, 45) zum Abschrägen der zueinander parallelen Randbereiche, die in der Weise wirksam sind, daß diese Randbereiche, nachdem sie zusammengebracht sind, eine Rinne (25) von im wesentlichen V-förmigem Querschnitt definieren, der in Richtung des genannten Laserstrahls offen ist, wobei die genannten Mittel zum Abschrägen mit Mitteln zum Zuschneiden der genannten Tafeln kombiniert sind und Druckrädchen (44) und Widerlager aufweisen, die paarweise beiderseits einer Umlaufebene der Platte angeordnet sind, wobei die Druckrädchen so ausgebildet sind, daß sie durch Verdrängen Rinnen (52) mit einem im wesentlichen V-förmigen Querschnitt in die genannten Tafeln eindrücken.

5. Anordnung nach Anspruch 4, dadurch gekennzeichnet, daß die zuvor erwähnten Vorspannmittel (28) wenigstens zwei Rollen (30) aufweisen, deren Achsen durch Stützteile (35) getragen werden, die jeweils in Führungsmitteln (36) beweglich sind, welche in einem festen Gestell definiert sind, wobei die beweglichen Stützteile sich senkrecht zu einer Bewegungsrichtung des genannten Mantels verschieben können, daß die Rollen beiderseits der Bahn des genannten Laserstrahls angeordnet sind und daß elastische Mittel (38) mit den genannten beweglichen Stützteilen gekuppelt sind, um die genannten Rollen gegeneinander vorzuspannen.

6. Anordnung nach Anspruch 5, bei der die genannten Mittel zum Trennen eine Zuteileinrichtung für die Blechtafeln (48) bilden und in diesen die genannten rechteckförmigen Tafeln (18) abgetrennt werden, dadurch gekennzeichnet, daß die Zuteileinrichtung zwei zueinander parallele drehbare Wellen (42, 43) aufweisen, die jeweils einen Satz der erwähnten Druckrädchen (44) bzw. Widerlager (45) tragen, welche paarweise beiderseits der Umlaufebene der genannten Tafeln angeordnet sind, wobei diese Sätze voneinander in einer Richtung parallel zu den genannten Wellen im Abstand angeordnet sind.

**Claims**

1. A method for laser welding two rectilinear edges of two plates, or of the same plate (18) which has been suitably shaped, the sides of the two edges having been put in contact, which consists of directing a laser beam (12) towards the line of contact of the said edges and causing a movement of the said beam relative to the said line of contact in such a way that the the "point of impact" (P) of the said beam moves along the said line of contact whilst forces driving the aforementioned sides towards one another are applied, characterized in that it comprises making bevels along the said longitudinal edges before putting them in contact, so as to form a groove (25) having a substantially V-shaped cross-section when the sides of the two edges are put in contact, the bevels being positioned in such a way that the said groove opens towards the said laser beam.

2. A method according to Claim 1 for the manufacture of a tubular shell (15) from a rectangular plate (18) which consists of shaping this plate to give it the desired tubular shape by joining two parallel edges of the said plate side against side, characterized in that it comprises making the said bevels on two parallel edges of the said plate prior to shaping it into a tube and moving the said tube during welding between two rollers (30) resiliently forced towards one another.

3. A method according to either one of the preceding Claims for the manufacture of metallic tubes from rectangular plates, characterized in that it comprises making, by compression, parallel grooves (52) having a substantially V-shaped cross-section and extending in a predetermined direction in sheets of metal, and cutting out the strips (50) delimited by the said grooves, perpendicularly to the latter to form the aforementioned separate rectangular plates (18), a parting force being exercised on the said grooves before or after the cutting stage in order to separate the said bevels.

4. An installation for manufacturing a tube by laser welding of two opposing parallel edges of a sheet metal plate which has been suitably shaped, of the kind comprising means for generating a laser beam, means for transmitting and focusing (13) the said beam on a "point of impact" ((P) of the latter located along the line of contact of the said edges, means for causing a relative movement of the said "point of impact" along the said line of contact, and driving means (28) arranged to encircle the said shaped plate of sheet metal and to force the sides of the said edges towards one another, characterized in that it comprises means (44, 45) for bevelling the said parallel edges arranged in such a way that these edges once put together define a groove (25) having a substantially V-shaped cross-section which is open towards the said laser beam, the said bevelling means being combined with means for cutting the said plates comprising roller wheels (44) and anvils (45) located in pairs on either side of a plane in which the plates move, the said roller wheels being shaped to impress, by compression, grooves (52) having a substantially V-shaped cross-section in the said sheets.

5. An installation according to Claim 4, characterized in that the two aforementioned driving means (28) comprise at least two rollers (30) the axles of which are carried by supports (35) which are movable in respective guiding means (36) defined in a fixed frame, these movable supports being displaceable perpendicularly to a direction of movement of the said tube, in that the rollers are located on either side of the trajectory of the said laser beam, and in that elastic means (38) are coupled to the said movable supports to force the said rollers towards one another.

6. An installation according to Claim 5, in which the cutting means form a station for delivering metal sheets (48) in which the said rectangular plates (18) are cut out, characterized in that this delivery station comprises two parallel rotatable shafts (42, 43) carrying respectively the aforementioned sets of roller wheels (44) and anvils (45) located in pairs on either side of a plane in which the said sheets move, the elements in the said sets being separated from one another in a direction parallel to the said shafts.

*FIG.1*

*FIG.2*

*FIG.3*